# EUROPEAN PATENT SPECIFICATION

(11) **EP 2 493 321 B1**
(45) Date of publication and mention of the grant of the patent: **23.12.2015**
(21) Application number: 10827054.7
(22) Date of filing: 26.10.2010
(51) Int. Cl.: A21D 13/06, A21D 2/00, A23L 1/0522

(54) **NON-FERMENTED STUFFED PANCAKE MIX COMPOSITION AND METHOD FOR MAKING A STUFFED PANCAKE USING THE SAME**
PFANNKUCHENMIX ZUR HERSTELLUNG VON NICHT-FERMENTIERTEN PFANNKUCHEN, SOWIE DEREN HERSTELLUNG
COMPOSITION MÉLANGÉE DE CRÊPE FOURRÉE NON FERMENTÉE ET PROCÉDÉ DE CONFECTION D'UNE CRÊPE FOURRÉE UTILISANT CELLE-CI

(30) Priority: 27.10.2009 KR 20090102502
(43) Date of publication of application: 05.09.2012
(73) Proprietor: CJ Cheiljedang Corporation, Jung-gu Seoul 100-400 (KR)
(72) Inventor: KIM, Young Jae, Seoul 151-772 (KR); LEE, Min Youl, Seoul 152-090 (KR); JEUNG, Keun Gu, Seoul 131-130 (KR); SONG, Sun Seob, Siheung-si Gyeonggi-do 429-902 (KR); LIM, Chun Son, Seoul 120-795 (KR)
(74) Representative: Mai, Dörr, Besier
(86) International application number: PCT/KR2010/007379
(87) International publication number: WO 2011/052970

(56) References cited:
- JP-A- 10 056 946
- KR-A- 20030 095 982
- KR-A- 20070 043 498
- US-A1- 2006 003 072
- DATABASE WPI Week 200917 Thomson Scientific, London, GB; AN 2009-E55963 XP002713831, & KR 2008 0073904 A (BOKSOMOON CO LTD) 12 August 2008 (2008-08-12)
- Sue: "Sweet Pancakes (Hoddeok), Pre Mix Version", , 23 January 2007 (2007-01-23), pages 1-3, XP002713832, Retrieved from the Internet: URL:http://mykoreankitchen.com/2007/01/23/ sweet-pancakes-hoddeok-pre-mix-version/ [retrieved on 2013-09-27]
- DATABASE GNPD [Online] MINTEL; 1 May 2007 (2007-05-01), Anonymous: "Glutinous Rice Hoteock", XP002713833, Database accession no. 697968
- DATABASE GNPD [Online] MINTEL; 1 October 2007 (2007-10-01), Anonymous: "Pancakes Mix", XP002713835, Database accession no. 796486
- DATABASE GNPD [Online] MINTEL; 12 August 2008 (2008-08-12), Anonymous: "Chinese Stuffed Pancake Mix", XP002713838, Database accession no. 1047462
- DATABASE GNPD [Online] MINTEL; 1 August 2008 (2008-08-01), Anonymous: "Mixed Flour for Pancake", XP002713839, Database accession no. 963772

## Description

### Technical Field

The present invention relates to a stuffed pancake mix composition and a method for preparing a stuffed pancake using the same as defined by the claims and more particularly, to a stuffed pancake mix composition which comprises modified tapioca starch, inactive dry yeast, and rapid-acting baking powder in an effective amount for the preparation of a stuffed pancake without a fermentation process, thereby reducing the cooking time for the stuffed pancake and maintaining a soft and chewy texture and fermented flavor, which are properties of the conventional fermented stuffed pancake mix, and a method for preparing a stuffed pancake using the same.

### Background Art

Stuffed pancakes are a representative traditional snack which are enjoyed by people of all ages at any time of the day during the winter season.

A stuffed pancake is basically a round-shaped, white rice cake that is stuffed with cinnamon-flavored brown sugar. Recently, flour or ground nuts such as peanuts are added so as to prevent brown sugar from seeping out and to improve viscosity.

With the increased diversity of foods, green tea stuffed pancakes have become popular, which are colored green by the addition of green tea to the white rice cake of the stuffed pancake. In addition, a pizza-stuffed pancake prepared for kids by the addition of pizza seasoning and cheese and a low-calorie diet stuffed pancake prepared for women interested in weight loss have recently come into the market.

Stuffed pancakes have usually been sold in traditional markets or on the street. Recently, as people's interest in health foods have increased, there has been a rapid increase in the number of people who try to cook homemade foods using raw materials, instead of buying ready-made products. Therefore, a stuffed pancake mix used for the simple and easy preparation of stuffed pancake is brought to market.

To make stuffed pancakes using a stuffed pancake mix, a fermentation process is traditionally required, in which, upon kneading the dough of a stuffed pancake, yeast is added to the dough and the dough is left at room temperature for approximately 30 min or longer, generally for 2 to 3 hrs in order to increase the volume of the dough, and to soften the texture and provide a fermented flavor.

The yeast fermentation process is included in the conventional preparation method of stuffed pancakes. Accordingly, there are difficulties in the management of yeast which is sensitive to temperature, humidity, and pH, and it is also difficult to perform Quality Control (QC) independent of a change in weather. Further, determination of a suitable fermentation termination point greatly affects the taste and flavor of stuffed pancakes. In particular, it is highly dependent upon the man's experience mainly. Furthermore, the yeast-fermented dough becomes too sticky, and thus sticks to the cast iron pan in which the stuffed pancake is prepared, which makes it hard to handle. Thus, it is disadvantageous in that the process cannot be automated.

In the food industry, many studies have been conducted to shorten the fermentation time during the preparation of stuffed pancakes, and as a result, there are many products marketed with this feature. However, there are still no products that maintain the texture and fermented flavor of fermented product even though they are prepared in a shorter fermentation time or prepared without a fermentation process.

### Disclosure of Invention

### Technical Problem

Accordingly, the present inventors have continued studies to reduce the fermentation time of stuffed pancake mix. As a result, they developed a stuffed pancake mix composition which comprises modified tapioca starch, inactive dry yeast, and rapid-acting baking powder in an effective amount for the preparation of stuffed pancake without a fermentation process, thereby reducing the cooking time for the stuffed pancake and making the cooking process more convenient, a method for preparing a stuffed pancake using the same, and a stuffed pancake prepared by the method, thereby completing the present invention.

### Solution to Problem

It is an object of the present invention to provide a stuffed pancake mix composition, which is able to maintain doughiness and formability without a fermentation process upon kneading the dough of the stuffed pancake.

It is another object of the present invention to provide a method for preparing a stuffed pancake, which does not require a fermentation process upon kneading dough of stuffed pancake, thereby reducing cooking time and providing a convenient and rapid cooking process.

It is still another object of the present invention to provide a stuffed pancake, which is rapidly prepared and maintains the texture and flavor of a conventional fermented stuffed pancake, even though it is prepared without a fermentation process upon the kneading of the dough of a stuffed pancake.

### Advantageous Effects of Invention

The stuffed pancake mix composition of the present invention comprises modified tapioca starch, inactive dry yeast, and rapid-acting baking powder in an amount effective for the preparation of a stuffed pancake without a fermentation process, thereby preventing the inconvenience of the 30 min or longer waiting time of the yeast fermentation and reducing the cooking time for the stuffed pancake. Thus, a rapid and convenient process of cooking a stuffed pancake is provided. Further, the stuffed pancake maintains doughiness and formability, and also maintains a soft texture and fermented flavor, compared to the conventional fermented stuffed pancake mix. Therefore, it can be used in the preparation of various foods such as bakery products, pizza or the like.

### Brief Description of Drawings

FIG. 1 is a graph showing the hardness of stuffed pancake mix doughs of Preparation Example 1, Comparative Example 1-1, and Comparative Example 2-1, measured by texture profile analysis;
FIG. 2 is a graph showing the chewiness of stuffed pancake mix doughs of Preparation Example 1, Comparative Example 1-1, and Comparative Example 2-1, measured by texture profile analysis;
FIG. 3 is a graph showing the springiness of stuffed pancake mix doughs of Preparation Example 1, Comparative Example 1-1, and Comparative Example 2-1, measured by texture profile analysis;
FIG. 4 is a graph showing the springiness of stuffed pancake mix doughs of Preparation Example 1, Comparative Example 1-1, and Comparative Example 2-1, measured by stress relaxation test;
FIG. 5 is a graph showing the physical properties of Preparation Example 2 and Comparative Example 2-2, measured by puncture test; and
FIGs. 6 and 7 are the results of consumer sensory test on Preparation Example 1 and Comparative Example 2-1.

### Best Mode for Carrying out the Invention

In one aspect to achieve the above objects, the present invention provides a stuffed pancake mix composition which comprises 25 to 30% by weight of modified tapioca starch, 0.1 to 0.3% by weight of inactive dry yeast, and 0.5 to 1.5% by weight to rapid-acting baking powder, based on the total weight of the composition for the preparation of a stuffed pancake without a fermentation process.

The above modified tapioca starch is usually hydroxypropyl-modified tapioca starch, and has the modified physical properties of native starch by treating tapioca-derived starch with a small amount of chemical so as to induce chemical modification by the reaction between the hydroxy group and the reactant or gelatinization thereof. The modification of tapioca starch improves stickiness and viscosity, emulsion stability, physical properties and texture of foods, and thus modified tapioca starch is generally used as a thickening agent in foods. The hydroxypropyl-modified tapioca starch can be obtained by reacting tapioca starch with propylene oxide in the presence of an alkali catalyst. The extent of such reaction is expressed as degree of substitution (DS), which is defined as the number of moles of substituent per glucose units of starch. The preferred DS is 0.05 to 0.18. If DS is less than 0.05, there is no significant difference in the effect between modified and unmodified starches. If DS is more than 0.18, the high degree of substitution results in a chewy texture, but tends to reduce elasticity. In the present invention, the modified tapioca starch is present in a large amount, in order to replenish the sticky texture and flavor, which may be reduced by omission of the fermentation process, and to increase the degree of digestion. Thus, the modified tapioca starch is contained in an amount of 25 to 30% by weight, based on the total weight of the stuffed pancake mix composition. In the stuffed pancake mix composition, if the modified tapioca starch is contained in an amount of less than 25% by weight, based on the total weight of the composition, the dough becomes soft, but the texture becomes too sticky. If the modified tapioca starch is contained in an amount of more than 30% by weight, based on the total weight of the composition, the texture becomes chewy, but the dough becomes hard, and thus there is no difference in the efficiency.

Inactive dry yeast contains 8 to 10 % moisture. In terms of being inactive, it is not usually used in bakery products, but mainly used in feed, medicine or functional food. In the present invention, the inactive dry yeast is contained in an amount of 0.1 to 0.3% by weight, based on the total weight of the stuffed pancake mix composition. In the stuffed pancake mix composition, if the inactive dry yeast is contained in an amount of less than 0.1% by weight, based on the total weight of the composition, the dough becomes hard, but the fermented flavor tends to reduce. If the inactive dry yeast is contained in an amount of more than 0.3% by weight, based on the total weight of the composition, the dough becomes soft and the fermented flavor improves, but the dough loses its stickiness.

The rapid-acting baking powder is prepared by mixing sodium bicarbonate with a rapid-acting acidulant, and is used as a rapid-acting expansion agent. Herein, the rapid-acting acidulant is usually added to expand the products during preparation of bakery products, thereby improving taste, softening products and improving digestion. Examples thereof may include glucono delta-lactone, calcium hydrogen phosphate, and fumaric acid that are well known in the art. In the present invention, the rapid-acting baking powder is contained in an amount of 0.5 to 1.5% by weight, based on the total weight of the stuffed pancake mix composition. In the stuffed pancake mix composition, if the rapid-acting baking powder is contained in an amount of less than 0.5% by weight, based on the total weight of the composition, the dough becomes hard and its volume is reduced. If the rapid-acting baking powder is contained in an amount of more than 1.5% by weight, based on the total weight of the composition, the dough volume is increased, but the dough loses its stickiness and the aftertaste becomes bitter.

Further, the stuffed pancake mix composition of the present invention may further include strong flour, medium flour, glutinous rice flour, soybean oil, modified waxy corn starch, white sugar, powdered skim milk, refined salt, glucose, roasted bean-flavored oil, and Gardenia Yellow. The modified tapioca starch, inactive dry yeast, and rapid-acting baking powder of the present invention are added in an effective amount for the preparation of a stuffed pancake without fermentation process, and the general ingredients used in the preparation of stuffed pancakes, such as strong flour, medium flour, and yeast, may be further included. Further, powder, dye or lactose known in the art may be also included.
The stuffed pancake mix composition may preferably include 35 to 45% by weight of strong flour, 15 to 20% by weight of medium flour, 25 to 30% by weight of modified tapioca starch, 4 to 6% by weight of glutinous rice flour, 2.5 to 3.5% by weight of soybean oil, 2 to 3% by weight of modified waxy corn starch, 1 to 3% by weight of white sugar, 1 to 3% by weight of powdered skim milk, 1 to 2% by weight of refined salt, 0.2 to 0.7% by weight of glucose, 0.5 to 1.5% by weight of rapid-acting baking powder, 0.1 to 0.3% by weight of roasted bean-flavored oil, 0.1 to 0.3% by weight of inactive dry yeast, and 0.01 to 0.05% by weight of Gardenia Yellow, based on the total weight.

In another aspect of the present invention, the present invention provides a method for preparing a stuffed pancake, comprising the steps of mixing the above-described stuffed pancake mix composition with water to prepare dough and frying the dough in a heated pan with oil, wherein the method does not comprise the step of fermentation of the dough.

In the above step, the temperature of the water may be preferably 30 to 50°C, and more preferably 40 °C. The stuffed pancake mix composition and water are preferably kneaded for 5 min. At this time, the method does not require the process of dough fermentation and then reduces the cooking time by at least 30 min, compared to the conventional preparation method of stuffed pancakes, thereby providing a convenient and rapid cooking process.

The present invention also relates to a stuffed pancake, which is prepared by the above-described method.

The preparation process of a stuffed pancake does not require a fermentation process, thereby reducing the cooking time and preparing a stuffed pancake which maintains the texture and fermented flavor of the conventional fermented stuffed pancake.

### Mode for the Invention

Hereinafter, the present invention will be described in more detail with reference to Examples. However, these Examples are for illustrative purposes only, and the invention is not intended to be limited by these Examples.

### Preparation Example 1: Preparation of stuffed pancake mix dough using the stuffed pancake mix composition according to the present invention

203 g of stuffed pancake mix composition prepared by mixing modified tapioca starch (26%), inactive dry yeast (0.2%), rapid-acting baking powder (1.0%), strong flour (39%), medium flour (17.07%), glutinous rice flour (5%), soybean oil(3%), modified waxy corn starch (2.5%), white sugar (2.0%), powdered skim milk (2.0%), refined salt (1.5%), glucose (0.5%), roasted bean-flavored oil (0.2%), and Gardenia Yellow (0.03%) was mixed with 40 °C water (125 g), and then kneaded for 5 min to prepare a stuffed pancake mix dough.

### Preparation Example 2: Preparation of stuffed pancake using the stuffed pancake mix composition according to the present invention

Without a fermentation process, 40 g of the stuffed pancake mix dough prepared in Preparation Example 1 was flattened to a thickness of 8 mm, and put in a frying pan with 3.7 g of vegetable oil that was preheated to 140 °C. The dough was fried for 3 min, and the prepared stuffed pancake was cooled at room temperature for 10 min.

### Comparative Example 1-1: Preparation of stuffed pancake mix dough using commercial stuffed pancake mix composition

201 g of commercially available "Glutinous Rice Stuffed Pancake Mix" (CJ cheiljedang corporation: flour (wheat: USA, Canada), glutinous rice flour (Korea) 5%, modified tapioca starch (hydroxypropyl tapioca starch), white sugar, powdered skim milk (milk), refined salt, glucose, baking powder (acidity regulator, glucono delta-lactone, starch, calcium stearate, L-potassium bitartrate), artificial flavor (roasted bean flavor), Gardenia Yellow, jam mix for stuffed pancake: white brown sugar, white sugar, peanut powder (China), brown sugar (raw sugar, caramel), glucose, flour (wheat: USA, Canada), soybean oil, cinnamon powder) and 4 g of yeast were mixed with 40°C water (130 g), and kneaded for 5 min to prepare a stuffed pancake mix dough.

### Comparative Example 1-2: Preparation of stuffed pancake using commercial stuffed pancake mix composition

Without a fermentation process, 40 g of the stuffed pancake mix dough prepared in Comparative Example 1-1 was flattened to a thickness of 8 mm, and put in a frying pan with 3.7 g of vegetable oil that was preheated to 140°C. The dough was fried for 3 min, and the other side was also fried for 3 min. The prepared stuffed pancake was cooled at room temperature for 10 min.

### Comparative Example 2-1: Preparation of stuffed pancake mix dough using commercial stuffed pancake mix composition

201 g of commercially available "Glutinous Rice Stuffed Pancake Mix" (CJ cheiljedang corporation: flour (wheat: USA, Canada), glutinous rice flour (Korea) 5%, modified tapioca starch (hydroxypropyl tapioca starch), white sugar, powdered skim milk (milk), refined salt, glucose, baking powder (acidity regulator, glucono delta-lactone, starch, calcium stearate, L-potassium bitartrate), artificial flavor (roasted bean flavor), Gardenia Yellow, jam mix for stuffed pancake: white brown sugar, white sugar, peanut powder (China), brown sugar (raw sugar, caramel), glucose, flour (wheat: USA, Canada), soybean oil, cinnamon powder) and 4 g of yeast were mixed with 40°C water (130 g), and kneaded for 5 min. The dough was fermented for 30 min to prepare a stuffed pancake mix dough.

### Comparative Example 2-2: Preparation of stuffed pancake using commercial stuffed pancake mix composition

Without a fermentation process, 40 g of the stuffed pancake mix dough prepared in Comparative Example 2-1 was flattened to a thickness of 8 mm, and put in a frying pan with 3.7 g of vegetable oil that was preheated to 140°C. The dough was fried for 3 min, and the prepared stuffed pancake was cooled at room temperature for 10 min.

### Experimental Example 1: Physical property test on dough by TPA (Texture Profile Analysis)

Each 1 g of dough prepared inPreparation Example 1, Comparative Example 1-1, and Comparative Example 2-1 was compressed by a texture analyzer using a 7.5 cm aluminium probe at a speed of 100 mm/min twice, and the change in force perceived over the time was analyzed to measure hardness, chewiness, and springiness, which are three physical properties affecting doughiness and formability of dough.

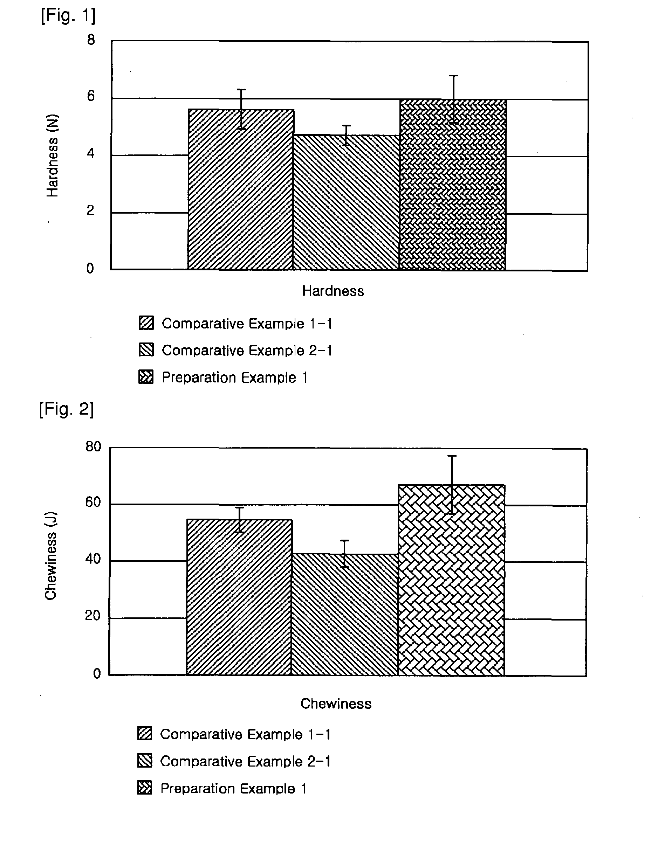

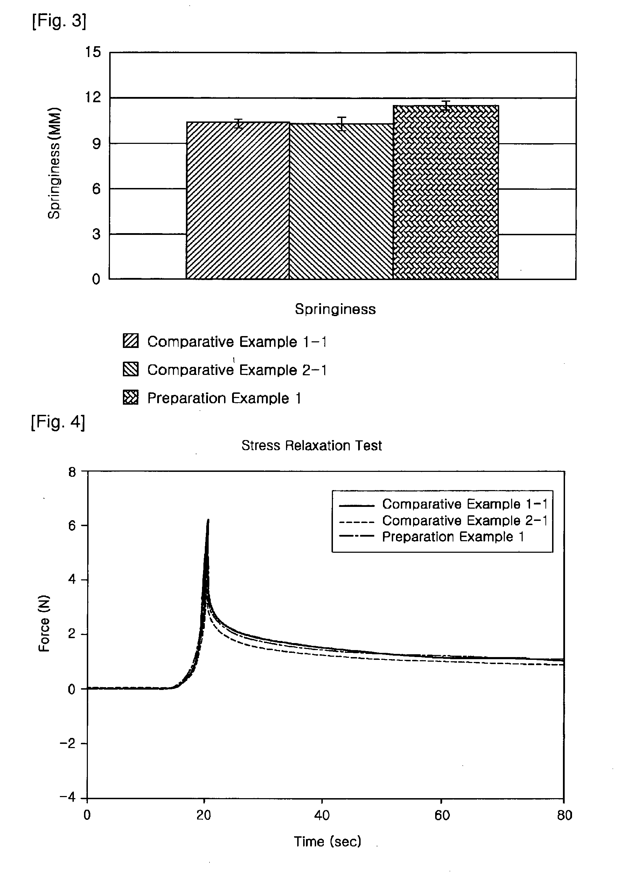

As a result, the dough of Preparation Example 1 was found to have higher hardness (FIG. 1), chewiness (FIG. 2) and springiness (FIG. 3) than those of Comparative Example 1-1 and Comparative Example 2-1, suggesting that the stuffed pancake mix dough prepared by the composition of the present invention has excellent doughiness and formability.

### Experimental Example 2: Stress Relaxation Test

Each 1 g of stuffed pancake mix doughs prepared inPreparation Example 1, Comparative Example 1-1, and Comparative Example 2-1 was compressed to a thickness of 6 mm by a texture analyzer using a 7.5 cm aluminium probe at a speed of 100 mm/ min, and maintained for 60 sec. The change in force perceived over the time was analyzed to measure springiness which affects doughiness and formability of dough.

As a result, the dough of Preparation Example 1 was found to have higher springiness than those of Comparative Example 1-1 and Comparative Example 2-1 (FIG. 4), suggesting that the stuffed pancake mix dough prepared by the composition of the present invention has excellent doughiness and formability.

### Experimental Example 3: Puncture Test

The stuffed pancakes prepared inPreparation Example 2 and Comparative Example 2-2 were longitudinally compressed by a texture analyzer using a 10 mm probe at a speed of 100 mm/min, and the maximum force required to penetrate the stuffed pancake was analyzed to measure hardness of the stuffed pancake.

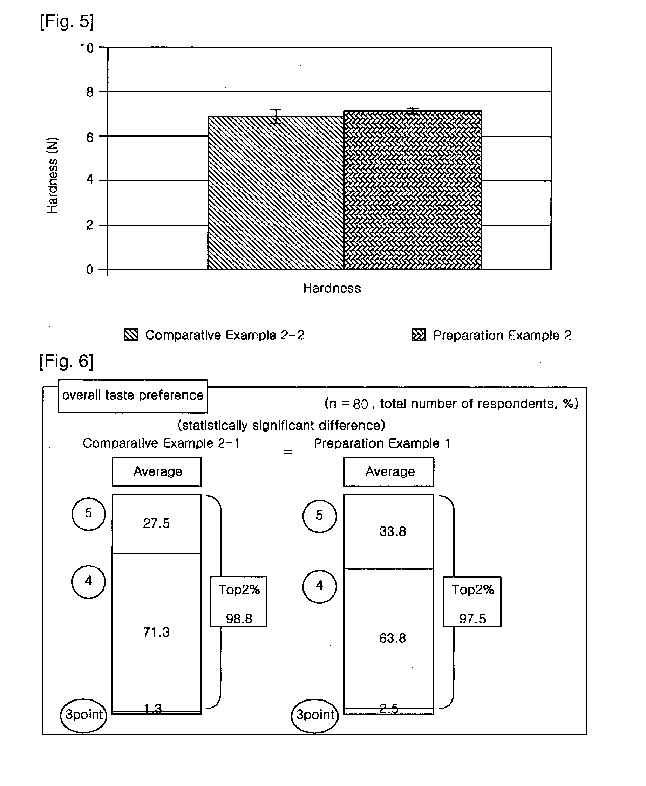

As a result, the stuffed pancakes of Preparation Example 2 and Comparative Example 2-2 were found to have similar hardness to each other (FIG. 5), suggesting that the stuffed pancake prepared by the composition of the present invention has soft and sticky texture similar to the fermented stuffed pancake commercially available.

### Experimental Example 4: Sensory test for stuffed pancake

80 house wives aged 30 to 49, who reside in Seoul and had experience of purchasing the commercial "Glutinous Rice Stuffed Pancake Mix" of CJ Cheiljedang Corporation of Comparative Example 2-1 in the recent 6 months, were subjected to sensory evaluation on the stuffed pancake prepared using the stuffed pancake mix dough of Preparation Example 1. The evaluation was performed under consistent conditions, except for conditions for the stuffed pancake mix dough such as jam mix for stuffed pancake, heating temperature, and heating time.

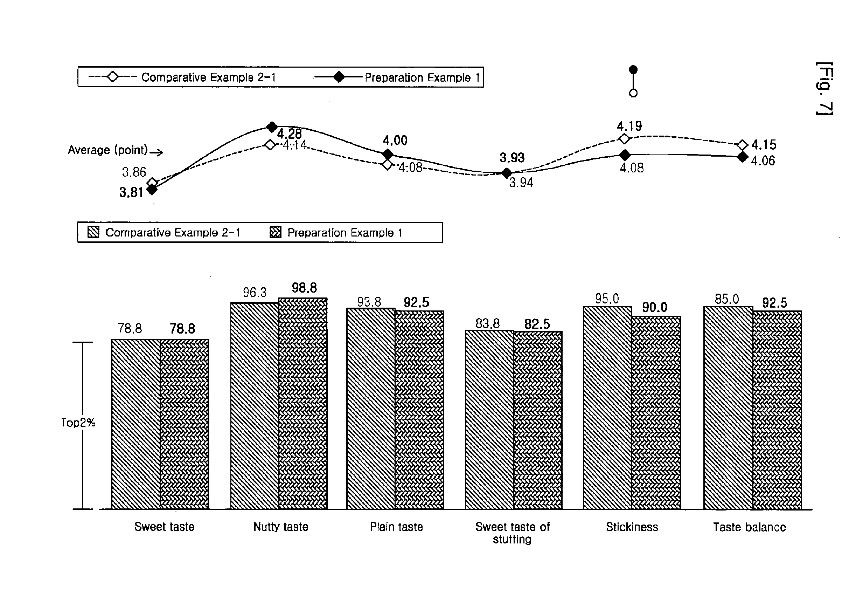

As a result, it was found that there was no overall statistically significant difference in taste preference between the stuffed pancakes prepared in Preparation Example 1 and Comparative Example 2-1, but the stuffed pancake of Preparation Example 1 practically obtained high scores, and there was also no statistically significant difference in the quality (see FIGs. 6 and 7), which suggesting that the stuffed pancake prepared using the composition of the present invention has doughiness, formability, texture, and flavor similar to those of the commercial fermented stuffed pancake.

### Industrial Applicability

The stuffed pancake mix composition of the present invention comprises modified tapioca starch, inactive dry yeast, and rapid-acting baking powder as defined by the claims in an amount effective for the preparation of a stuffed pancake without a fermentation process, thereby preventing the inconvenience of the 30 min or longer waiting time of the yeast fermentation and reducing the cooking time for the stuffed pancake. Thus, a rapid and convenient process of cooking a stuffed pancake is provided. Further, the stuffed pancake maintains doughiness and formability, and also maintains a soft texture and fermented flavor, compared to the conventional fermented stuffed pancake mix. Therefore, it can be used in the preparation of various foods such as bakery products, pizza or the like.

## Claims

1. A stuffed pancake mix composition, comprising 25 to 30% by weight of modified tapioca starch, 0.1 to 0.3% by weight of inactive dry yeast, and 0.5 to 1.5% by weight of rapid-acting baking powder, based on the total weight of the composition for the preparation of stuffed pancake without a fermentation process.

2. The stuffed pancake mix composition according to claim 1, wherein the composition further comprises strong flour, medium flour, glutinous rice flour, soybean oil, modified waxy corn starch, white sugar, powdered skim milk, refined salt, glucose, roasted bean-flavored oil, and Gardenia Yellow.

3. The stuffed pancake mix composition according to claim 2, wherein the composition comprises 35 to 45% by weight of strong flour, 15 to 20% by weight of medium flour, 25 to 30% by weight of modified tapioca starch, 4 to 6% by weight of glutinous rice flour, 2.5 to 3.5% by weight of soybean oil, 2 to 3% by weight of modified waxy corn starch, 1 to 3% by weight of white sugar, 1 to 3% by weight of powdered skim milk, 1 to 2% by weight of refined salt, 0.2 to 0.7% by weight of glucose, 0.5 to 1.5% by weight of rapid-acting baking powder, 0.1 to 0.3% by weight of roasted bean-flavored oil, 0.1 to 0.3% by weight of inactive dry yeast, and 0.01 to 0.05% by weight of Gardenia Yellow, based on the total weight of the composition.

4. A method for preparing a stuffed pancake, comprising the steps of:
(a) mixing the stuffed pancake mix composition of any one of claims 1 to 3 with water to prepare dough; and
(b) frying the dough in the heated pan with oil,
wherein the method does not comprise the step of fermentation of the dough prepared in step (a).

## Patentansprüche

1. Mischzusammensetzung für gefüllte Pfannkuchen, umfassend 25 bis 30 Gew.-% modifizierte Tapiokastärke, 0,1 bis 0,3 Gew.-% inaktive Trockenhefe, und 0,5 bis 1,5 Gew.-% schnellwirkendes Backpulver, basierend auf dem Gesamtgewicht für die Herstellung von gefülltem Pfannkuchen ohne Fermentationsprozess.

2. Mischzusammensetzung für gefüllte Pfannkuchen nach Anspruch 1, wobei die Zusammensetzung ferner kräftiges Mehl, mittleres Mehl, Klebreismehl, Sojabohnenöl, modifizierte wachshaltige Maisstärke, weißen Zucker, pulverisierte Magermilch, raffiniertes Salz, Glukose, Öl mit Geschmack nach gerösteten Bohnen, und Gardeniengelb umfasst.

3. Mischzusammensetzung für gefüllte Pfannkuchen nach Anspruch 2, wobei die Zusammensetzung 35 bis 45 Gew.-% kräftiges Mehl, 15 bis 20 Gew.-% mittleres Mehl, 25 bis 30 Gew.-% modifizierte Tapiokastärke, 4 bis 6 Gew.-% Klebreismehl, 2,5 bis 3,5 Gew.-% Sojabohnenöl, 2 bis 3 Gew.-% modifizierte wachshaltige Maisstärke, 1 bis 3 Gew.-% weißen Zucker, 1 bis 3 Gew.-% pulverisierte entrahmte Milch, 1 bis 2 Gew.-% raffiniertes Salz, 0,2 bis 0,7 Gew.-% Glukose, 0,5 bis 1,5 Gew.-% schnellwirkendes Backpulver, 0,1 bis 0,3 Gew.-% Öl mit Geschmack nach gerösteten Bohnen, 0,1 bis 0,3 Gew.-% inaktive Trockenhefe, und 0,01 bis 0,05 Gew.-% Gardeniengelb umfasst, basierend auf dem Gesamtgewicht der Zusammensetzung.

4. Verfahren zur Herstellung eines gefüllten Pfannkuchens, umfassend die folgenden Schritte:
(a) Mischen der Mischzusammensetzung für gefüllte Pfannkuchen nach einem der Ansprüche 1 bis 3 mit Wasser, um einen Teig herzustellen; und
(b) Anbraten des Teiges in der erhitzten Pfanne mit Öl,
wobei das Verfahren nicht den Schritt der Fermentierung des Teiges, der in Schritt (a) hergestellt wurde, umfasst.

## Revendications

1. Composition de mélange pour crêpe farcie, comprenant de 25 à 30 % en poids d'un amidon de tapioca modifié, de 0,1 à 0,3 % en poids de levure sèche inactive et de 0,5 à 1,5 % en poids de levure chimique à action rapide, par rapport au poids total de la composition pour la préparation d'une crêpe farcie sans processus de fermentation.

2. Composition de mélange pour crêpe farcie selon la revendication 1, dans laquelle la composition comprend en outre de la farine forte, de la farine moyenne, de la farine de riz gluant, de l'huile de soja, de l'amidon de maïs cireux modifié, du sucre blanc, du lait écrémé en poudre, du sel raffiné, du glucose, de l'huile ayant le goût de haricot torréfié et du jaune de gardénia.

3. Composition de mélange pour crêpe farcie selon la revendication 2, dans laquelle la composition comprend de 35 à 45 % en poids de farine forte, de 15 à 20 % en poids de farine moyenne, de 25 à 30 % en poids d'amidon de tapioca modifié, de 4 à 6 % en poids de farine de riz gluant, de 2,5 à 3,5 % en poids d'huile de soja, de 2 à 3 % en poids d'amidon de maïs cireux modifié, de 1 à 3 % en poids de sucre blanc, de 1 à 3 % en poids de lait écrémé en poudre, de 1 à 2 % en poids de sel raffiné, de 0,2 à 0,7 % en poids de glucose, de 0,5 à 1,5 % en poids de levure chimique à action rapide, de 0,1 à 0,3 % en poids d'huile ayant le goût de haricot torréfié, de 0,1 à 0,3 % en poids de levure sèche inactive et de 0,01 à 0,05 % en poids de jaune de gardénia, par rapport au poids total de la composition.

4. Procédé de préparation d'une crêpe farcie, comprenant les étapes consistant à :
(a) mélanger la composition de mélange pour crêpe farcie selon l'une quelconque des revendications 1 à 3 avec de l'eau pour préparer une pâte ; et
(b) faire frire la pâte dans une poêle chauffée avec de l'huile,
le procédé ne comprenant pas d'étape de fermentation de la pâte préparée dans l'étape (a).
